# EUROPÄISCHE PATENTSCHRIFT

(11) **EP 3 529 180 B1**
(45) Veröffentlichungstag und Bekanntmachung des Hinweises auf die Patenterteilung: **19.01.2022**
(21) Anmeldenummer: 17784954.4
(22) Anmeldetag: 17.10.2017
(51) Int. Cl.: B65G 23/16

(54) **FÖRDERSYSTEM**
CONVEYING SYSTEM
SYSTÈME DE TRANSPORT

(30) Priorität: 24.10.2016 AT 26216 U
(43) Veröffentlichungstag der Anmeldung: 28.08.2019
(73) Patentinhaber: LHB Mining Solutions GmbH, 8700 Leoben (AT)
(72) Erfinder: HINTERHOLZER, Stefan, 8700 Leoben (AT)
(74) Vertreter: Dilg, Haeusler, Schindelmann Patentanwaltsgesellschaft mbH
(86) Internationale Anmeldenummer: PCT/EP2017/076491
(87) Internationale Veröffentlichungsnummer: WO 2018/077670

(56) Entgegenhaltungen:
- WO-A1-2014/121231
- CH-A1- 708 428
- DE-A1-102006 008 657
- DE-B- 1 071 584
- DE-U1- 20 208 385
- GB-A- 1 500 909
- GB-A- 2 007 178
- GB-A- 2 148 826
- NL-A- 7 603 924
- US-A- 3 033 353
- US-A- 4 058 204
- US-A1- 2009 139 830
- US-B1- 6 945 387
- US-B2- 9 169 072

## Beschreibung

### Technisches Gebiet

Die vorliegende Erfindung betrifft ein Fördersystem und ein Verfahren zum Fördern eines Fördergutes. Die Erfindung bezieht sich auf ein Fördersystem, insbesondere auf ein Fördersystem mit Zugkraftbegrenzung bei steil ansteigenden Förderern, bei dem durch gezieltes Wählen der Anzahl der Zwischenantriebe, dem Abstand zwischen den Zwischenantrieben und der Antriebskräfte bzw. Antriebsleistungen an den Zwischenantrieben die Zugkraft unabhängig von der Förderhöhe des Förderers gezielt begrenzt bzw. gezielt unter einer Höchstzugkraft gehalten wird.

### Hintergrund der Erfindung

Es sind Fördersysteme für steil ansteigende Förderer bekannt, die ihren Antrieb am oberen Ende der Förderstrecke angeordnet haben und somit die gesamte Zugkraft, die sich aus Zug- bzw. Tragorganeigengewichtskraft, der Beladungsgewichtskraft, der Bewegungswiderstandskraft und der Vorspannkraft zusammensetzt, über diesen Antrieb abbauen. Bei diesen Fördersystemen nimmt die Zugkraft entsprechend ihrer Förderhöhe stetig zu und ist somit direkt von der Förderhöhe abhängig. Diese Fördersysteme sind im Durchsatz und der Förderhöhe durch deren maximale Zugkraft eingeschränkt, da die dafür eingesetzten Zugträger wie Gurte, Seile, Ketten, usw. in ihrer zulässigen Belastung begrenzt sind.

DE1071584 offenbart ein Fördersystem und ein Verfahren nach den Oberbegriffen der Ansprüchen 1 und 15.

### Darstellung der Erfindung

Es ist eine Aufgabe der vorliegenden Erfindung, ein Steil-Fördersystem zum insbesondere vertikalen Fördern von schweren Gütern zu schaffen.

Diese Aufgabe wird mit einem Fördersystem zum Fördern eines Fördergutes und mit einem Verfahren zum Fördern eines Fördergutes gemäß den unabhängigen Ansprüchen bereitgestellt.

Gemäß einem ersten Aspekt der vorliegenden Erfindung wird ein Fördersystem nach Anspruch 1 zum Fördern eines Fördergutes bereitgestellt. Das Fördersystem weist eine Förderbahn, welche eine Förderoberfläche aufweist, auf welcher das Fördergut platzierbar ist, wobei die Förderbahn eine angrenzend zu Förderoberfläche ausgebildete Kopplungsfläche aufweist, welche ein erstes Kopplungsprofil aufweist. Das Fördersystem weist ferner zumindest einen Förderantrieb zum Antreiben und/oder Bremsen der Förderbahn auf, wobei der Förderantrieb ein zweites Kopplungsprofil aufweist. Das erste Kopplungsprofil ist mit dem zweiten Kopplungsprofil derart gekoppelt, dass der Förderantrieb mit der Förderbahn zur Übertragung einer Förderkraft (z.B. Antriebskraft oder Bremskraft) formschlüssig gekoppelt ist.

Gemäß einem weiteren Aspekt der vorliegenden Erfindung wird ein Verfahren nach Anspruch 15 zum Fördern eines Fördergutes bereitgestellt. Das Verfahren weist ein Platzieren eines Förderguts auf einer Förderoberfläche einer Förderbahn auf, wobei die Förderbahn eine angrenzend zu Förderoberfläche ausgebildete Kopplungsfläche aufweist, welche ein erstes Kopplungsprofil aufweist. Das Verfahren weist ferner ein Antreiben und/oder ein Bremsen der Förderbahn mittels eines Förderantriebs auf, wobei der Förderantrieb ein zweites Kopplungsprofil aufweist. Das erste Kopplungsprofil ist mit dem zweiten Kopplungsprofil derart gekoppelt, dass der Förderantrieb mit der Förderbahn zur Übertragung einer Förderkraft formschlüssig gekoppelt ist.

Das erfindungsgemäße Fördersystem dient zum Fördern von einem Fördergut, welches ein hohes Gewicht aufweist und insbesondere mit einer vertikalen Richtungskomponente gefördert werden soll. Das Förderergut kann beispielsweise aus Gesteinsbrocken oder anderen Schüttgütern mit großen Dimensionen und gewichten bestehen.

Das Fördersystem weist eine Förderbahn auf. Die Förderbahn kann beispielsweise ein Förderband bzw. ein Gurtbandförderer, eine Förderkette oder eine Förderbahn bestehend aus mehreren Fördergliedern bestehen. Auf der Fördereroberfläche der Förderbahn kann ein Förderprofil, wie beispielsweise eine profilierte Oberfläche, eine Förderoberfläche nach Art eines Becherförderers oder andere Tragelemente zum Tragen das Förderergutes angeordnet sein.

Die Förderbahn ist entlang einer Förderrichtung bewegbar. Quer zur Förderrichtung und entlang der Breite der Förderbahn wird im Folgenden die Querrichtung der Förderbahn definiert.

Die Förderbahn ist insbesondere als geschlossene Schlaufe ausgebildet. Das Fördergut wird entlang einer Förderstrecke zwischen einem Startpunkt und einen Endpunkt gefördert, wobei an dem Startpunkt und an dem Endpunkt die Förderbahn an Umlenkrolle umgelenkt wird. Alternativ kann die Förderbahn an einem ihrer Enden aufgerollt bzw. aufgewickelt und abgewickelt werden.

Ferner bildet die Förderbahn das erste Kopplungsprofil aus, welches mittels eines zweiten Kopplungsprofils des Förderantriebs eine formschlüssige Kopplung eingeht. Das erste Kopplungsprofil und das korrespondierende zweite Kopplungsprofil können beispielsweise ein entsprechendes Zahnprofil aufweisen. Ferner kann das erste Kopplungsprofil oder das zweite Kopplungsprofil andere Eingriffsstrukturen aufweisen, wie beispielsweise das unten beschriebene Stangenelement, welches quer zu einer Förderrichtung der Förderbahn verläuft.

Das erste Kopplungsprofil wird dabei beispielsweise entlang der gesamten Länge der Förderbahn ausgebildet. Das erste Kopplungsprofil kann beispielsweise lösbar, beispielsweise mittels einer Schraubenverbindung, an die Förderbahn befestigt werden. Ferner kann das Kopplungsprofil auf die Kopplungsfläche der Förderbahn geklebt oder geschweißt werden. Ferner besteht die Möglichkeit, dass die Förderbahn zusammen mit dem ersten Kopplungsprofil ausgebildet ist und die Förderbahn und das erste Kopplungsprofil somit eine integrale und monolithische Einheit bilden. Die Förderbahn kann beispielsweise aus einem robusten und flexiblen Kunststoffmaterial und/oder Kautschukmaterial hergestellt sein.

Der Förderantrieb dient zum Erzeugen einer Förderkraft, um dadurch die Förderbahn anzutreiben. Für die Kraftkopplung wird das erste Kopplungsprofil mit dem zweiten Kopplungsprofil formschlüssig gekoppelt, um dadurch eine präzise und robuste Kraftübertragung auf die Förderbahn zu bewirken. Die Förderkraft kann einerseits als Antriebskraft eingesetzt werden, um das Förderergut bzw. die Förderbahn anzutreiben, insbesondere bei einer gewissen Neigung bzw. Steigung, in welcher das Förderergut von einem tieferen Startpunkt zu einem höheren Endpunkt befördert werden soll. Aufgrund der formschlüssigen Kopplung kann die Förderkraft auch als Bremskraft eingesetzt werden. Der Förderantriebe wird somit als Bremse eingesetzt, welcher der Bewegung der Förderbahn entgegenwirkt. Beispielsweise ist es notwendig, dass bei Transport eines Fördererguts von einem höheren Startpunkt zu einem tieferen Endpunkt die Förderbahn gebremst werden muss, um die Geschwindigkeit der Förderbahn konstant zu halten oder zu reduzieren. Ein Förderantrieb kann dabei als Elektromotor ausgebildet sein, welcher ebenfalls im Generatorbetrieb betrieben werden kann. Ferner kann der Förderantrieb beispielsweise eine Magnetbremse bzw. Wirbelstrombremse aufweisen.

Aufgrund der formschlüssigen Kopplung der Förderbahn mit dem Förderantrieb, kann somit eine robuste Kraftübertragung bereitgestellt werden, sodass das Fördersystem für schweres Förderergut einsetzbar ist. Gemäß einer weiteren beispielhaften Ausführungsform ist die Kopplungsfläche der Förderbahn gegenüberliegend zu der Förderoberfläche ausgebildet ist. Gemäß einer weiteren beispielhaften Ausführungsform ist die Kopplungsfläche der Förderbahn seitlich (auf in Bezug auf die Förderrichtung) an der Förderoberfläche ausgebildet.

Gemäß einer weiteren beispielhaften Ausführungsform ist die Kopplungsfläche der Förderbahn an der Förderoberfläche ausgebildet. Beispielsweise weist die Förderbahn in Querrichtung an deren Rändern zunächst zwei Kopplungsbahnen auf, an welchen das erste Kopplungsprofil ausgebildet wird. Zwischen den beiden Kopplungsbahnen wird die Förderoberfläche ausgebildet, auf welcher das Förderergut gefördert wird.

Gemäß einer weiteren beispielhaften Ausführungsform bildet das erste (oder zweite) Kopplungsprofil ein Zahnprofil aus. Das zweite Kopplungsprofil kann dabei beispielsweise aus einer Förderkette bestehen, in welchen das Zahnprofil des ersten Kopplungsprofils selektiv eingreift.

Erfindungsgemäß weist das Fördersystem fernerzumindest eine Anpressrolle und eine Auflagerrolle auf, welche derart angeordnet sind, dass die Förderbahn zwischen der Anpressrolle und der Auflagerrolle vorliegt, um die Förderbahn zu stabilisieren. Die Anpressrolle kann auch derart angeordnet sein, dass die Förderbahn zwischen der Anpressrolle und dem Förderantrieb verläuft, um die Förderbahn an den Förderantrieb anzupressen.

Gemäß einer weiteren beispielhaften Ausführungsform ist das erste Kopplungsprofil und/oder das zweite Kopplungsprofil als Zahnriemenprofil ausgebildet sind. Entsprechend kann beispielsweise die Förderbahn und/oder die unten beschriebene Antriebsbahn als Riemen bzw. als Bandriemenförderer ausgebildet sein.

Gemäß einer weiteren beispielhaften Ausführungsform weist das Fördersystem ein Kopplungsband auf, wobei das erste Kopplungsprofil an dem Kopplungsband ausgebildet ist, welches, insbesondere mittels Klebens, Vulkanisierens oder mechanischer Verbindung, an der Kopplungsfläche der Förderbahn fixiert wird. Eine mechanische Verbindung kann beispielsweise mittels einer (insbesondere lösbaren) Niet- oder Schraubverbindung umgesetzt werden. Insbesondere kann bei Defekt der Kopplungsbahn oder der Förderbahn ein defekter Bereich der Kopplungsbahn oder Förderbahn gelöst werden und mittels eines intakten Bereichs der Kopplungsbahn oder Förderbahn ausgetauscht werden.

Gemäß einer weiteren beispielhaften Ausführungsform weist der Förderantrieb eine Antriebsbahn auf, wobei zumindest ein Abschnitt der Antriebsbahn parallel zu einem Koppelbereich der Förderbahn verläuft. Die Antriebsbahn bildet das zweite Kopplungsprofil derart aus, dass die Antriebsbahn entlang dem Koppelbereich der Förderbahn mit dieser formschlüssig in Eingriff steht. Der Koppelbereich ist in Förderrichtung beispielsweise drei- bis viermal so lang wie die Breite der Förderbahn in Querrichtung. Der Koppelbereich kann auch länger ausgebildet werden.

Die Antriebsbahn kann beispielsweise ebenfalls ein Antriebsband, ein Antriebsriemen oder eine Antriebskette ausbilden. An der Antriebsbahn wird der zweite Koppelbereich ausgebildet.

Bei Verwendung der erfindungsgemäßen Antriebsbahn wird die Förderkraft nicht punktuell sondern entlang eines lang gestreckten Koppelbereichs übertragen. Somit kann die Förderkraft schonend übertragen werden, da bei Übertragung der Förderkraft keine punktuellen Kraftspitzen entstehen. Dies führt zu einer geringeren Belastung der Antriebsbahn und entsprechend zu einem robusteren Fördersystem.

Erfindungsgemäß bildet die Antriebsbahn eine geschlossene Schleife aus, welche um zwei beabstandete Umlaufrollen geführt ist. Die Drehachsen der Umlaufrollen sind auf einer gemeinsamen Mittelachse angeordnet. Zumindest eine der Umlaufrollen kann als Antriebstrommel bzw. Antriebsrolle ausgebildet sein. Diese bringen die Förderkraft beispielsweise als Antriebskraft oder Bremskraft auf und übertragen diese auf die Antriebsbahn.

Gemäß einer weiteren beispielhaften Ausführungsform bildet die Förderbahn eine geschlossene Schleife aus, welche um zwei weitere beabstandete Umlaufrollen geführt ist, wobei zwischen den weiteren Umlaufrollen die Förderbahn einen Vorlaufabschnitt und einen Rücklaufabschnitt, welche beabstandet voneinander geführt werden, aufweist. Die Antriebsbahn ist derart angeordnet und ausgebildet ist, dass zumindest ein Abschnitt der Antriebsbahn mit dem ersten Koppelprofil an dem Vorlaufabschnitt und ein weiterer Abschnitt der Antriebsbahn mit dem ersten Koppelprofil an dem Rücklaufabschnitt der Förderbahn gekoppelt ist.

An dem Vorlaufabschnitt ist insbesondere die Förderoberfläche ausgebildet, auf welcher das Förderergut befördert wird. Fördert das Fördersystem entlang einer gewissen Steigung, in welchen das Förderergut auf eine gewisse Höhe gefördert wird, so führt der Vorlaufabschnitt von einer unteren Umlaufrolle zu einer oberen Umlaufrolle. Der Rücklaufabschnitt führt von der oberen Umlaufrolle zu der unteren Umlaufrolle. Der Förderantrieb überträgt über die Antriebsbahn entsprechend eine gewisse Antriebskraft um das Förderergut auf die bestimmte Höhe zu befördern. Die Förderbahn entlang des Rücklaufabschnitts weist entsprechend eine gewisse Gewichtskraft auf. Die Gewichtskraft erzeugt dabei eine Kraft, welche der Antriebskraft, mit welcher der Vorlaufabschnitt angetrieben wird, entgegenwirkt. Ein Rücklaufabschnitt der Antriebsbahn wird in der beispielhaften Ausführungsform mit dem Rücklaufabschnitt der Förderbahn gekoppelt, sodass die Gewichtskraft der Förderbahn auf die Antriebsbahn übertragen wird. Da die Antriebsbahn an einer unteren Position umgelenkt wird und der Rücklaufabschnitt der Antriebsbahn in den Vorlaufabschnitt der Antriebsbahn übergeht, wird ebenfalls die eingebrachte Gewichtskraft umgelenkt, sodass diese in Richtung der Antriebskraft wirkt und diese entsprechend verstärkt. Somit kann die Gewichtskraft des Rücklaufabschnitts der Förderbahn durch die Antriebsbahn aufgenommen und umgelenkt werden, sodass diese effizient der Antriebskraft hinzugefügt werden kann und diese verstärkt. Somit wird Antriebsenergie eingespart und das Fördersystem effizienter gestaltet.

Gemäß einer weiteren beispielhaften Ausführungsform ist die Antriebsbahn über zumindest eine Führungsrolle geführt. Die Führungsrolle derart angeordnet ist, dass ein Abstand zwischen der Mittelachse und dem Kontaktpunkt zwischen der Führungsrolle und der Antriebsbahn größer ist als ein Durchmesser zumindest einer der Umlenkrollen. Somit drückt die Führungsrolle die Antriebsbahn von der Mittelachse fort. Mit anderen Worten wird mittels der Führungsrolle der Zuführabschnitt weiter von dem Rücklaufabschnitt der Antriebsbahn weggedrückt, sodass sich eine Überhöhung bildet. Entlang dieser Überhöhung ist eine stabilere Kopplung mit dem ersten Kopplungsprofil der Förderbahn gewährleistet.

Gemäß einer weiteren beispielhaften Ausführungsform weist die Antriebsbahn zumindest ein Stangenelement auf, welches quer zu einer Förderrichtung der Förderbahn verläuft und das zweite Kopplungsprofil ausbildet. Das Stangenelement weist beispielsweise einen Rundstahl auf. Beispielsweise kann das Stangenelement in ein Zahnprofil als erstes Kopplungsprofil der Förderbahn eingreifen, um die Förderkraft zu übertragen. Die Stangenelemente können insbesondere austauschbar an der Antriebsbahn angeordnet werden, sodass bei einem Defekt ein schneller Austausch ermöglicht wird.

Gemäß einer weiteren beispielhaften Ausführungsform weist die Antriebsbahn zumindest zwei (in Querrichtung) beabstandete Trägerbahnen, insbesondere aufweisend Kettenelemente, auf, zwischen welchen das zumindest eine Stangenelement angeordnet ist.

Gemäß einer weiteren beispielhaften Ausführungsform weist das Fördersystem Kopplungselemente auf, welche das zweite Kopplungsprofil ausbilden. Die Kopplungselemente sind an der Antriebsbahn fixiert. Die Kopplungselemente können beispielsweise Erhebungen (Nocken) aufweisen, welche zum Eingriff in das erste Kopplungsprofil ausgebildet sind. Die Kopplungselemente können beispielsweise eine Erstreckung quer zur Förderrichtung aufweisen um in ein entsprechendes Zahnprofil des ersten Kopplungsprofils der Förderbahn einzugreifen.

Gemäß einer weiteren beispielhaften Ausführungsform sind die Kopplungselemente lösbar, insbesondere mittels einer Schraubverbindung, an der Antriebsbahn gekoppelt.

Gemäß einer weiteren beispielhaften Ausführungsform weist der Förderantrieb ein Antriebselement, insbesondere eine Antriebstrommel, auf, welches mit der Antriebsbahn zur Übertragung einer Förderkraft gekoppelt ist. Das Antriebselement kann selbst eine Antriebsbahn darstellen oder eine runde Antriebstrommel darstellen. Das Antriebselement wird beispielsweise mittels eines Elektromotors oder eines Verbrennungsmotors angetrieben.

Gemäß einer weiteren beispielhaften Ausführungsform ist das Antriebselement mit der Antriebsbahn reibschlüssig gekoppelt. Beispielsweise weist die Antriebsbahn und das Antriebselement eine raue Oberfläche auf, sodass eine reibschlüssige Verbindung ermöglicht wird.

Gemäß einer weiteren beispielhaften Ausführungsform weist das Antriebselement ein weiteres Zahnprofil und die Antriebsbahn ein drittes Kopplungsprofil zur formschlüssigen Kopplung mit dem Zahnprofil des Antriebselements auf.

Gemäß einer weiteren beispielhaften Ausführungsform weist das Fördersystem ferner zumindest einen weiteren Förderantrieb zum Antreiben und/oder Bremsen der Förderbahn auf. Der weitere Förderantrieb ist in Bahnlaufrichtung der Förderbahn beabstandet zu dem Förderantrieb angeordnet, wobei der weitere Förderantrieb ein weiteres zweites Kopplungsprofil aufweist. Das erste Kopplungsprofil der Förderbahn ist mit dem weiteren zweiten Kopplungsprofil derart gekoppelt, dass der weitere Förderantrieb mit dem Förderband zur Übertragung einer Förderkraft formschlüssig gekoppelt ist.

Der weitere Fördererantrieb kann dieselben Merkmale wie der oben beschriebene Förderantrieb aufweisen.

Mit der Anordnung eines weiteren Förderantriebs wird die Übertragung der benötigten Förderkraft aufgeteilt und die aufgeteilte Förderkraft an beabstandet Bereichen der Förderbahn in diese übertragen. Somit wird die Gesamtbeanspruchung der Förderbahn reduziert, da nicht punktuell an einer bestimmten Stelle die gesamte Förderkraft übertragen wird, sondern an mehreren Bereichen jeweils eine reduzierte Förderkraft. Die Summe aller mittels der Förderantriebe übertragenen Förderkraft bildet die benötigte Gesamtförderkraft.

Gemäß einer weiteren beispielhaften Ausführungsform wird entsprechend durch gezieltes Wählen der Anzahl der Förderantriebe (Zwischenantriebe), dem Abstand zwischen den Förderantrieben und der Antriebskräfte bzw. Antriebsleistungen an den Förderantrieben die Zugkraft unabhängig von der Förderhöhe des Förderers gezielt begrenzt bzw. gezielt unter einer Höchstzugkraft gehalten.

Gemäß einer weiteren beispielhaften Ausführungsform weist die Förderbahn relativ zu einer Horizontalen eine Neigung (z.B. zwischen 20 Grad und 90 Grad) auf, wobei der Förderantrieb und der weitere Förderantrieb auf unterschiedlichen Höhen relativ zu der Horizontalen angeordnet sind.

Gemäß einer weiteren beispielhaften Ausführungsform ist zumindest der Förderantrieb oder der weitere Förderantrieb modular an die Förderbahn ankoppelbar ist.

Dabei können beliebig viele Förderantriebe entlang der Förderbahn angeordnet werden. Insbesondere können je nach Bedarf an Förderkraft die Förderantriebe modular gekoppelt oder entkoppelt werden. Da in einer bevorzugten Ausführungsform entlang der gesamten Förderbahn das erste Kopplungsprofil ausgebildet ist, kann an beliebigen Stellen ein entsprechender Förderantrieb angekoppelt werden oder entkoppelt werden.

Gemäß einem weiteren Aspekt wird ein Fördersystem geschaffen, insbesondere ein Fördersystem mit Zugkraftbegrenzung bei steil ansteigenden Förderern, dadurch gekennzeichnet, dass durch gezieltes Wählen der Anzahl der Zwischenantriebe (d.h. der oben beschriebenen Förderantriebe), dem Abstand zwischen den Zwischenantrieben und der Antriebskräfte bzw. Antriebsleistungen an den Zwischenantrieben die Zugkraft unabhängig von der Förderhöhe des Förderers gezielt begrenzt bzw. gezielt unter einer Höchstzugkraft gehalten wird.

Gemäß einem anderen Aspekt erfolgt die Kraftübertragung durch die Zwischenantriebe an den Förderer mittels Reibschluss.

Gemäß einem anderen Aspekt erfolgt die Kraftübertragung durch die Zwischenantriebe an den Förderer mittels Formschluss.

Gemäß einem anderen Aspekt erfolgt die Kraftübertragung durch die Zwischenantriebe an den Förderer teilweise mittels Formschluss und teilweise mittels Reibschluss.

Gemäß einem anderen Aspekt erfolgt die Kraftübertragung durch die Zwischenantriebe an den Förderer an der Rückseite, an der Vorderseite oder an der Seite des Zugorgans.

Gemäß einem anderen Aspekt weist die Linienführung während der Förderstrecke unterschiedliche Neigungen auf.

Gemäß einem anderen Aspekt sind die Förderhöhenerweiterungen oder - Verringerungen am Förderer mit gleichen Zugträger durch das System mit Zwischenantrieben unbegrenzt möglich.

Die Erfindung zielt darauf ab, dass genannte Förderer in ihrer Zugkraft - unabhängig von der Förderhöhe - begrenzt bzw. gezielt unter einer Höchstzugkraft gehalten werden. Dies wird durch Anordnung von mehreren Zwischenantrieben (Förderantriebe) entlang der Förderstrecke erreicht. Die Förderkraftübertragung vom Zwischenantrieb an den Förderer erfolgt entweder durch Reib- oder durch Formschluss. An den Zwischenantrieben entlang der Förderstrecke wird die Zugkraft verringert. Dadurch wird erreicht, dass die Zugkraft innerhalb eines Bereiches begrenzt bzw. gezielt unter einer Höchstzugkraft gehalten wird. Mit dieser Erfindung ist es möglich durch gezieltes Wählen der Anzahl der Zwischenantriebe, dem Abstand zwischen den Zwischenantrieben und der Antriebskräfte bzw. Antriebsleistungen an den Zwischenantrieben, Zugträger (Förderbahnen) wie Gurte, Seile, Ketten, usw. mit deren begrenzten zulässigen Belastung unabhängig von der Förderhöhe einzusetzen.

Es wird darauf hingewiesen, dass die hier beschriebenen Ausführungsformen lediglich eine beschränkte Auswahl an möglichen Ausführungsvarianten der Erfindung darstellen. So ist es möglich, die Merkmale einzelner Ausführungsformen in geeigneter Weise miteinander zu kombinieren, so dass für den Fachmann mit den hier expliziten Ausführungsvarianten eine Vielzahl von verschiedenen Ausführungsformen als offensichtlich offenbart anzusehen sind. Insbesondere sind einige Ausführungsformen der Erfindung mit Vorrichtungsansprüchen und andere Ausführungsformen der Erfindung mit Verfahrensansprüchen beschrieben.

### Kurze Beschreibung der Zeichnungen

Im Folgenden werden zur weiteren Erläuterung und zum besseren Verständnis der vorliegenden Erfindung Ausführungsbeispiele unter Bezugnahme auf die beigefügten Zeichnungen näher beschrieben. Es zeigen:
Fig. 1 eine Frontalansicht auf einen bekannten steil ansteigenden Förderer mit senkrechtem Streckenverlauf mit Antrieb am oberen Ende des Förderers.
Fig. 2 eine Frontalansicht auf das erfindungsgemäß Fördersystem mit Zugkraftbegrenzung bei steil ansteigenden Förderern durch Anordnung von Zwischenantrieben.
Fig. 3A und 3B ein Detail eines Zwischenantriebes mit Reibschluss.
Fig. 4A und 4B ein Detail eines Zwischenantriebes mit Formschluss.
Fig. 5 eine schematische Darstellung eines Abschnitts eines Fördersystems mit einer Förderbahn und einer Antriebsbahn gemäß einer beispielhaften Ausführungsform der vorliegenden Erfindung
Fig. 6 eine schematische Darstellung eines Abschnitts eines Fördersystems mit Stangenelementen, welche ein zweites Kopplungsprofil ausbilden, gemäß einer beispielhaften Ausführungsform der vorliegenden Erfindung
Fig. 7 eine schematische Darstellung eines Abschnitts eines Fördersystems mit Kopplungsnocken, welche an die Förderbahn lösbar gekoppelt sind, gemäß einer beispielhaften Ausführungsform der vorliegenden Erfindung
Fig. 8 eine schematische Darstellung eines Abschnitts eines Fördersystems mit einer Antriebsbahn aufweisend Kopplungselemente gemäß einer beispielhaften Ausführungsform der vorliegenden Erfindung
Fig. 9 eine schematische Darstellung eines Abschnitts einer Förderbahn aufweisend Randbereiche gemäß einer beispielhaften Ausführungsform der vorliegenden Erfindung
Fig. 10 bis Fig. 12 schematische Darstellungen eines Fördersystems mit einer Förderbahn aufweisend ein seitliches erstes Kopplungsprofil gemäß einer beispielhaften Ausführungsform der vorliegenden Erfindung
Fig. 13 eine schematische Darstellung eines Abschnitts eines Fördersystems aufweisend eine Antriebsbahn mit 2 beanstandeten Trägerbahnen die mit Stangenelementen verbunden sind gemäß einer beispielhaften Ausführungsform der vorliegenden Erfindung
Fig. 14 und Fig. 15 schematische Darstellungen eines Abschnitts eines Fördersystems, in welchen Anpressrollen dargestellt sind gemäß einer beispielhaften Ausführungsform der vorliegenden Erfindung.
Fig. 16 eine schematische Darstellung eines Abschnitts eines Fördersystems, wobei die Antriebsbahn mit dem Vorlaufabschnitt und dem Rücklaufabschnitt gekoppelt ist, gemäß einer beispielhaften Ausführungsform der vorliegenden Erfindung.
Fig. 17 eine schematische Darstellung eines Abschnitts eines Fördersystems mit Führungsrollen, welche eine Überhöhung bilden, gemäß einer beispielhaften Ausführungsform der vorliegenden Erfindung.

### Detaillierte Beschreibung von exemplarischen Ausführungsformen

Gleiche oder ähnliche Komponenten in unterschiedlichen Figuren sind mit gleichen Bezugsziffern versehen. Die Darstellungen in den Figuren sind schematisch.

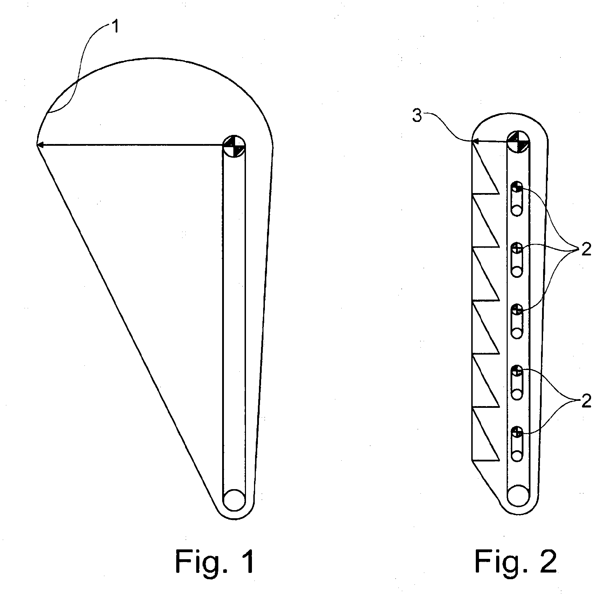

Die Erfindung wird anhand der Zeichnungen näher erläutert. Es zeigt **Fig. 1** einen Aufriss eines Förderers mit senkrechtem Streckenverlauf. Der Antrieb erfolgt am oberen Ende des Förderers. Die Größe der Zugkraft wird schematisch mit einem Zugkraftverlauf - welcher 90° zum Streckenverlauf steht - dargestellt. Die Zugkraft 1 nimmt von der unteren Umlenkung bis zur oberen Umlenkung zu und setzt sich aus der Zug- bzw. Tragorganeigengewichtskraft, der Beladungsgewichtskraft, der Bewegungswiderstandskraft und Vorspannkraft zusammen. Der Antrieb erfolgt am oberen Ende des Förderers. Die gesamte Zugkraft wird an diesem Antrieb abgebaut.

Es zeigt **Fig. 2** einen Aufriss eines Förderers mit senkrechtem Streckenverlauf unter Verwendung des Fördersystems mit Zugkraftbegrenzung bei steil ansteigenden Förderern. Die Zugkraft nimmt ausgehend von der unteren Umlenkung mit der gleichen Intensität wie in Fig. 1 zu. Jedoch erfolgt der Antrieb während der Förderstrecke durch ein oder mehrere Zwischenantriebe 2. An jedem Zwischenantrieb entlang der Förderstrecke wird die Zugkraft begrenzt, bzw. verringert 3. Die Förderkraftübertragung vom Zwischenantrieb an den Förderer erfolgt entweder durch Reib- oder durch Formschluss. Mit dieser Erfindung wird -durch gezieltes Wählen der Anzahl der Zwischenantriebe, dem Abstand zwischen den Zwischenantrieben und der Antriebskräfte bzw. Antriebsleistungen an den Zwischenantrieben - die Zugkraft unabhängig von der Förderhöhe des Förderers begrenzt.

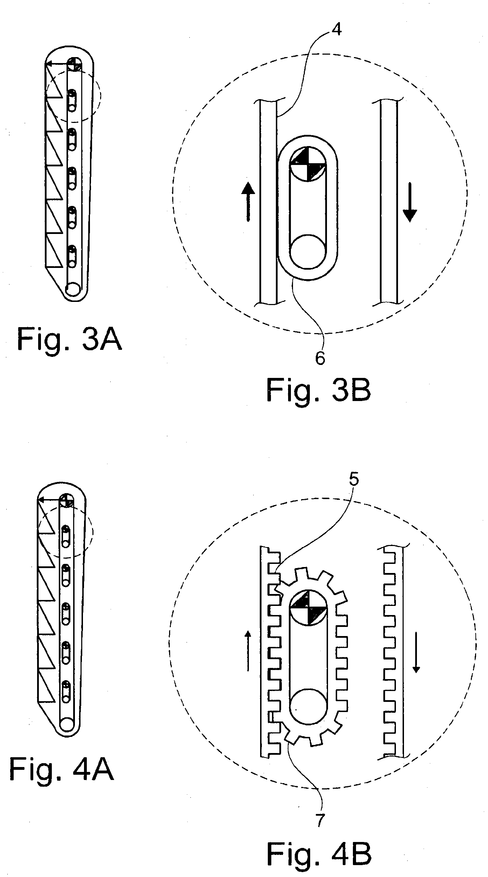

Es zeigen **Fig. 3A** und **Fig. 3B** die Anordnung der Zwischenantriebe als reibschlüssige und **Fig. 4A und Fig. 4B** als formschlüssige Kraftübertragung. Als Zug- und Tragorgan des Förderers wurde ein Gurt dargestellt. Dieser kann mit glatter Oberfläche 4 für den Reibschluss oder mit profilierter Oberfläche 5 für den Formschluss verwendet werden. Zur Kraftübertragung durch den Zwischenantrieb wurde ebenfalls ein Gurt dargestellt. Dieser kann mit glatter Oberfläche 6 für den Reibschluss oder mit profilierter Oberfläche 7 für den Formschluss verwendet werden. Zur Führung des Förderers während der Strecke und im Bereich der Zwischenantriebe können Trag und/ oder Stützrollen verwendet werden. Es wird darauf hingewiesen, dass Förderer, wie z. B.: ein Steilfördergurt, ein Gurtbecherwerk, ein Kettenbecherwerk, ein Kettenförderer, ein Gliederbandförderer, usw., verwendet werden kann. Des Weiteren kann auch am Zwischenantrieb eine andere Form des Zugträgers gewählt werden, wie z. B. ein Gurt, ein Seil, eine Kette, usw. Ausschlaggebend für die Gurtzugkraftbegrenzung sind die Anordnungen, die Anzahl sowie die Förderkraft der Zwischenantriebe und nicht die Art des Zugträgers. Es ist des Weiteren möglich, den Zugträger direkt als glatte Trommel für den reibschlüssigen Antrieb, bzw. als profilierte Trommel für den formschlüssigen Antrieb auszuführen.

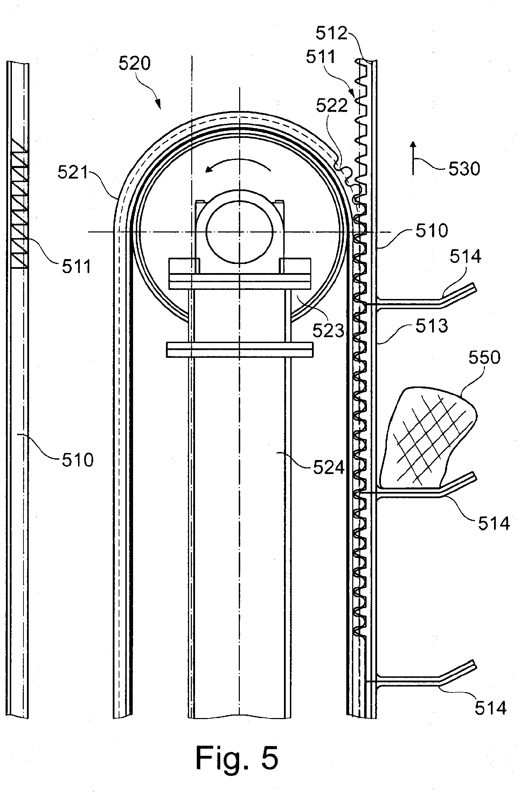

**Fig. 5** zeigt eine schematische Darstellung eines Abschnitts eines Fördersystems 500 zum Fördern eines Fördergutes 550 mit einer Förderbahn 510 und einer Antriebsbahn 521 gemäß einer beispielhaften Ausführungsform der vorliegenden Erfindung.

Das Fördersystem 500 weist eine Förderbahn 510, welche eine Förderoberfläche 513 aufweist, auf welcher das Fördergut 550 platzierbar ist, wobei die Förderbahn 510 eine angrenzend zu Förderoberfläche 513 ausgebildete Kopplungsfläche 512 aufweist, welche ein erstes Kopplungsprofil 511 aufweist. Das Fördersystem 500 weist ferner zumindest einen Förderantrieb 2, 520 zum Antreiben und/oder Bremsen der Förderbahn 510 auf, wobei der Förderantrieb 520 ein zweites Kopplungsprofil 522 aufweist. Das erste Kopplungsprofil 511 ist mit dem zweiten Kopplungsprofil 522 derart gekoppelt, dass der Förderantrieb 520 mit der Förderbahn 510 zur Übertragung einer Förderkraft formschlüssig gekoppelt ist.

Das Fördersystem 500 weist eine Förderbahn 510 auf. Die Förderbahn 510 kann beispielsweise ein Förderband bzw. ein Gurtbandförderer, eine Förderkette oder eine Förderbahn 510 bestehend aus mehreren Fördergliedern bestehen. Auf der Fördereroberfläche 513 der Förderbahn 510 kann ein Förderprofil, wie beispielsweise eine profilierte Oberfläche, eine Förderoberfläche nach Art eines Becherförderers oder andere Tragelemente 514 zum Tragen das Förderergutes 550 angeordnet sein.

Die Förderbahn 510 ist entlang einer Förderrichtung 530 bewegbar. Quer zur Förderrichtung und entlang der Breite der Förderbahn 510 wird im Folgenden die Querrichtung der Förderbahn 510 definiert.

Die Förderbahn 510 ist insbesondere als geschlossene Schlaufe ausgebildet. Das Fördergut 550 wird entlang einer Förderstrecke zwischen einem Startpunkt und einen Endpunkt gefördert, wobei an dem Startpunkt und an dem Endpunkt die Förderbahn 510 an Umlenkrolle umgelenkt wird.

Ferner bildet die Förderbahn 510 das erste Kopplungsprofil 511 aus, welches mittels eines zweiten Kopplungsprofils 522 des Förderantriebs 520 bzw. der Förderbahn 521 eine formschlüssige Kopplung eingeht. Das erste Kopplungsprofil 511 und das korrespondierende zweite Kopplungsprofil 522 können beispielsweise wie in Fig. 5 dargestellt ein entsprechendes Zahnprofil aufweisen.

Das erste Kopplungsprofil 511 wird dabei beispielsweise entlang der gesamten Länge der Förderbahn 510 ausgebildet. Das erste Kopplungsprofil 511 kann beispielsweise lösbar, beispielsweise mittels einer Schraubenverbindung, an die Förderbahn 510 befestigt werden. Ferner kann das Kopplungsprofil 511 auf die Kopplungsfläche 512 der Förderbahn 510 geklebt oder geschweißt werden. Ferner besteht die Möglichkeit, dass die Förderbahn 510 zusammen mit dem ersten Kopplungsprofil 511 ausgebildet ist und die Förderbahn 510 und das erste Kopplungsprofil 511 somit eine integrale und monolithische Einheit bilden.

Der Förderantrieb 520 dient zum Erzeugen einer Förderkraft, um dadurch die Förderbahn 510 anzutreiben. Für die Kraftkopplung wird das erste Kopplungsprofil 511 mit dem zweiten Kopplungsprofil 522 formschlüssig gekoppelt, um dadurch eine präzise und robuste Kraftübertragung auf die Förderbahn 510 zu bewirken.

Aufgrund der formschlüssigen Kopplung der Förderbahn 510 mit dem Förderantrieb 520, kann somit eine robuste Kraftübertragung bereitgestellt werden, sodass das Fördersystem 500 für schweres Förderergut 550 einsetzbar ist.

Wie in dem Ausführungsbeispiel von Fig. 5 dargestellt ist die Kopplungsfläche 512 der Förderbahn 510 gegenüberliegend zu der Förderoberfläche 513 ausgebildet.

Der Förderantrieb 520 in Fig. 5 weist eine Antriebsbahn 521 auf, wobei zumindest ein Abschnitt der Antriebsbahn 521 parallel zu einem Koppelbereich bzw. der Koppelfläche 512 der Förderbahn 510 verläuft. Die Antriebsbahn 521 bildet das zweite Kopplungsprofil 522 derart aus, dass die Antriebsbahn 521 entlang dem Koppelbereich 512 der Förderbahn 510 mit dieser formschlüssig in Eingriff steht. Der Koppelbereich 512 ist in Förderrichtung 530 beispielsweise drei- bis viermal so lang wie die Breite der Förderbahn 510 in Querrichtung.

Bei Verwendung der erfindungsgemäßen Antriebsbahn 521 wird die Förderkraft nicht punktuell sondern entlang eines lang gestreckten Koppelbereichs 512 übertragen. Somit kann die Förderkraft schonend übertragen werden, da bei Übertragung der Förderkraft keine punktuellen Kraftspitzen entstehen. Dies führt zu einer geringeren Belastung der Antriebsbahn 521 und entsprechend zu einem robusteren Fördersystem 500.

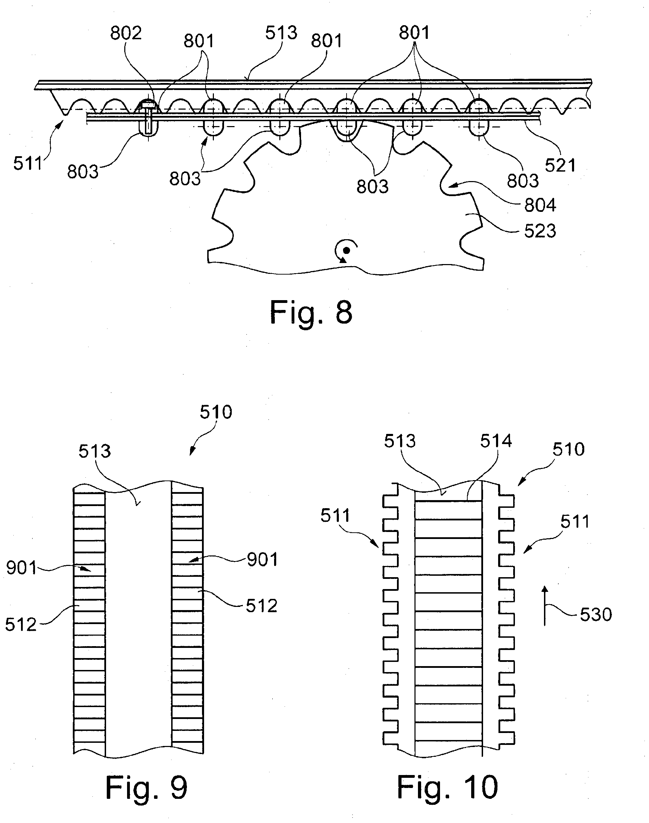

Der Förderantrieb 520 weist in der gezeigten beispielhaften Ausführungsform eine Antriebstrommel als Antriebselement 523, auf, welches mit der Antriebsbahn 521 zur Übertragung einer Förderkraft gekoppelt ist. Das Antriebselement 523 kann selbst eine Antriebsbahn darstellen (siehe Fig. 8) oder eine runde Antriebstrommel darstellen.

In Fig. 5 ist das Antriebselement 523 mit der Antriebsbahn 521 reibschlüssig gekoppelt.

Der in Fig. 5 dargestellte Förderantrieb 520 kann für die Zwischenantriebe 2 in den Figuren Fig. 2 bis Fig. 4B eingesetzt werden. Entsprechend weist das Fördersystem 500 mehrere weitere Förderantrieb 2, 520 zum Antreiben und/oder Bremsen der Förderbahn 510 auf. Der weitere Förderantrieb 2, 520 ist entsprechend in Bahnlaufrichtung 530 der Förderbahn 510 beabstandet zu dem Förderantrieb 2, 520 angeordnet, wobei der weitere Förderantrieb 2, 520 ein weiteres zweites Kopplungsprofil 522 aufweist. Das erste Kopplungsprofil 511 der Förderbahn 510 ist mit dem weiteren zweiten Kopplungsprofil 522 derart gekoppelt, dass der weitere Förderantrieb 2, 520 mit dem Förderband 510 zur Übertragung einer Förderkraft formschlüssig gekoppelt ist.

Die Förderbahn 510 und entsprechend die Antriebsbahn 521 können relativ zu einer Horizontalen eine Neigung aufweisen, wobei die Förderantriebe 2, 520 auf unterschiedlichen Höhen relativ zu der Horizontalen angeordnet sein können.

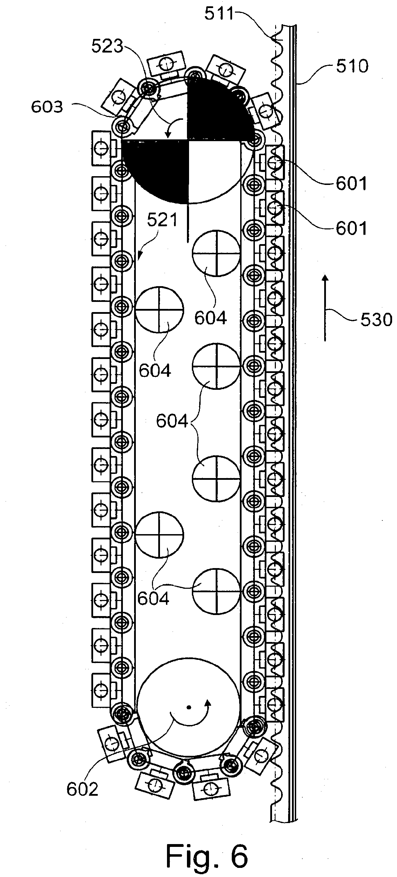

**Fig. 6** zeigt eine schematische Darstellung eines Abschnitts eines Fördersystems 500 mit Stangenelementen 601, welche da zweite Kopplungsprofil 522 ausbilden. Das entsprechende erste Kopplungsprofil 511 der Förderbahn 510 bildet ein Zahnprofil aus, in welche beispielsweise die Stangenelemente 601 selektiv eingreifen. Die Stangenelemente 601 verlaufen quer zu einer Förderrichtung 530 der Förderbahn 510. Die Stangenelemente 601 können insbesondere austauschbar an der Antriebsbahn 521 angeordnet werden, sodass bei einem Defekt ein schneller Austausch ermöglicht wird.

Ferner sind in Fig. 6 Stützrollen 604 dargestellt, welche die Antriebsbahn 521 gegen die Förderbahn 510 drücken, um eine formschlüssige Verbindung sicherzustellen. Die Antriebsbahn 521 wird ebenfalls beispielsweise um Umlenkrolle in 602 umgelenkt. Das Antriebselement 523 ist beispielsweise als Antriebstrommel mit einem außenliegenden Zahnprofil ausgebildet, um die Antriebsbahn 521 anzutreiben.

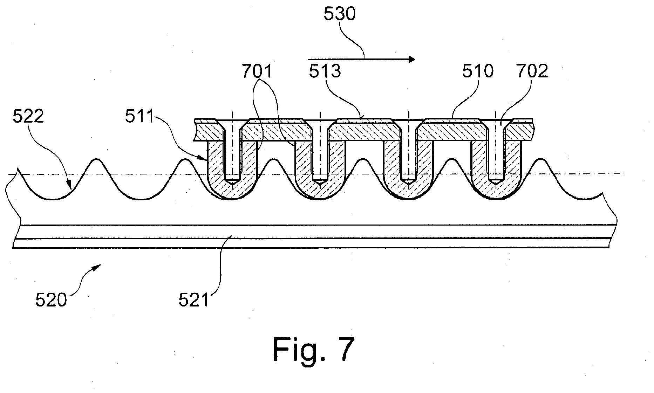

**Fig. 7** zeigt eine schematische Darstellung eines Abschnitts eines Fördersystems 500 mit Kopplungsnocken 701, welche an die Förderbahn 510 lösbar gekoppelt sind. Die Kopplungsnocken 701 bilden das erste Kopplungsprofil 511 aus. Die Kopplungsnocken 701 sind dabei mittels einem Schraubenelement 702 lösbar befestigt. Die Kopplungsnocken 701 können dabei quer zur Förderrichtung 530 verlaufen.

**Fig. 8** eine schematische Darstellung eines Abschnitts eines Fördersystems 500 mit einer Antriebsbahn 521 aufweisend Kopplungselemente 801, welche das zweite Kopplungsprofil 522 ausbilden. Die Kopplungselemente 801 sind an der Antriebsbahn 521 fixiert. Die Kopplungselemente 801 können beispielsweise Erhebungen (Nocken) oder Stangenelemente aufweisen, welche zum Eingriff in das erste Kopplungsprofil 511 ausgebildet sind. Die Kopplungselemente 801 können beispielsweise eine Erstreckung quer zur Förderrichtung aufweisen um in ein entsprechendes Zahnprofil des ersten Kopplungsprofils 511 der Förderbahn 510 einzugreifen.

Die Kopplungselemente 801 sind lösbar, insbesondere mittels eines Schraubenelements 802, an der Antriebsbahn 521 gekoppelt.

Das Antriebselement 523 ist in der beispielhaften Ausführungsform als Antriebsrad bzw. Antriebstrommel ausgebildet. Das Antriebselement 523 weist ein weiteres Zahnprofil auf. Die Antriebsbahn 521 bildet ein drittes Kopplungsprofil 803 zur formschlüssigen Kopplung mit dem Zahnprofil 804 des Antriebselements 523 aus. Die Antriebstrommel kann als Umlauftrommel ausgebildet sein, sodass die Antriebsbahn 521 um die Antriebstrommel geführt ist. In dem in Fig. 8 gezeigten Ausführungsbeispiel verläuft die Antriebsbahn 521 geradlinig (tangential) und ist tangential über die Antriebstrommel 521 geführt.

Das dritte Kopplungsprofil 803 kann beispielsweise mit dem Kopplungselement 801 erzeugt werden. Das Kopplungselement 801 kann dabei entlang zweier gegenüberliegender Oberflächen der Antriebsbahn 521 Erhebungen bilden und entsprechend in das erste Kopplungsprofil 511 und das weitere Zahnprofil 804 zu Übertragung einer Förderkraft eingreifen.

**Fig. 9** zeigt eine schematische Darstellung eines Abschnitts einer Förderbahn 510 aufweisend Randbereiche 901. An den Randbereichen 901 kann beispielsweise die Kopplungsfläche 512 der Förderbahn 510 an der Förderoberfläche 513 ausgebildet werden. Beispielsweise weist die Förderbahn 510 in Querrichtung an deren Rändern bzw. Randbereichen 901 zunächst zwei Kopplungsbahnen auf, an welchen das erste Kopplungsprofil 511 ausgebildet wird. Zwischen den beiden Kopplungsbahnen wird die Förderoberfläche 513 ausgebildet, auf welcher das Förderergut 500 gefördert wird.

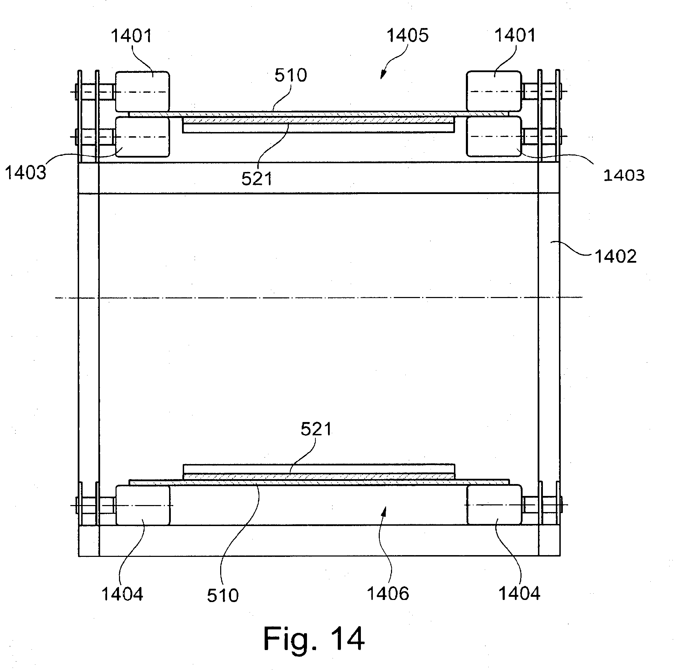

Ferner kann entlang der Randbereiche 901 eine strukturfreie Oberfläche der Förderbahn 510 ausgebildet werden, sodass entlang dieser Randbereiche 901 entsprechende Anpressrollen 1401, 1402 (siehe Fig. 14) verlaufen, um die Förderbahn 510 gegen eine Auflagerrolle 1403 (siehe Fig. 14) und/oder den Förderantrieb 520 zu pressen.

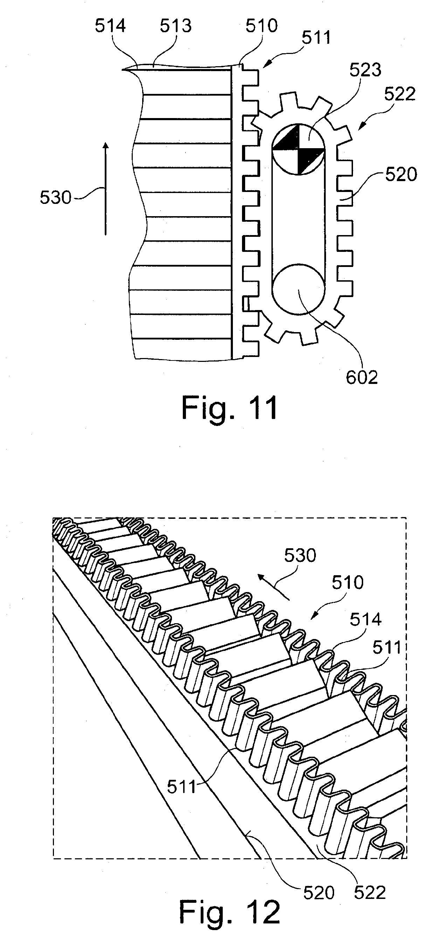

**Fig. 10** bis **Fig. 12** zeigen schematische Darstellungen eines Fördersystems 500 mit einer Förderbahn 510 aufweisend seitliche erste Kopplungsprofile 511. Wie in **Fig. 11** dargestellt, kann die Förderkraft von dem Förderantrieb 520 seitlich auf die Förderbahn 510 übertragen werden. Zwischen den seitlichen ersten Kopplungsprofil 511 befindet sich die Förderoberfläche 513 mit den Trägerelementen 514.

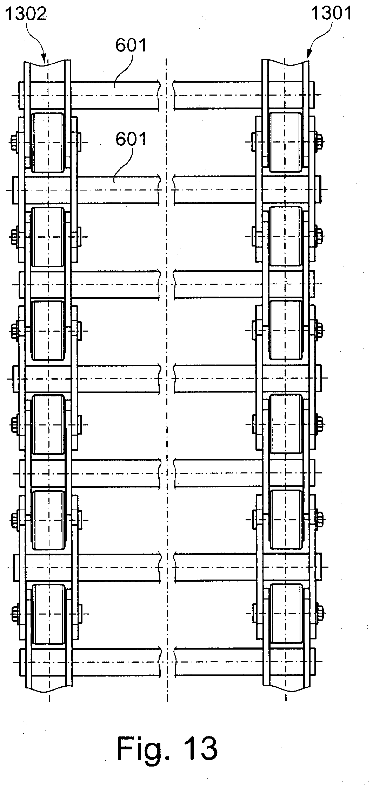

**Fig. 13** zeigt eine schematische Darstellung eines Abschnitts eines Fördersystems 500 aufweisend eine Antriebsbahn 521 mit zwei (in Querrichtung) beanstandeten Trägerbahnen 1301, 1302, die mit Stangenelementen 601 verbunden sind. Die Trägerbahnen 1301, 1302 bilden beispielsweise Kettenelemente aus. Die Stangenelemente 601 können beispielsweise lösbar an den Trägerbahnen 1301, 1302 befestigt werden.

**Fig. 14** zeigt eine schematische Darstellung eines Abschnitts eines Fördersystems 500, in welchen Anpressrollen 1401 dargestellt sind. Die Förderbahn ist beispielsweise als Schlaufe ausgebildet und weist einen Vorlaufabschnitt 1405 auf, mittels welchem das Förderergut transportiert wird. Nach Abgabe des Fördererguts und nach Umlenkung um eine Umlenkrolle wird die Förderbahn 510 entlang eines Rücklaufabschnitts 1406 zurückgeführt. In dem gezeigten Beispiel sind ferner Auflagerollen 1404 gezeigt, auf welchen der Rücklaufabschnitt 1406 aufgrund seiner Gewichtskraft aufliegt. Ferner sind Auflagerrollen 1403 gezeigt, auf welchen der Vorlaufabschnitt 1405 zusammen mit der Antriebsbahn 521 aufliegt. Die Anpressrollen 1401 sind derart ausgebildet, dass die Förderbahn 510 zwischen den Anpressrollen 1401 und Auflagerrollen 1403 zusammengedrückt und geführt wird. Damit wird eine bessere Führung der Förderbahn 510 gewährleistet.

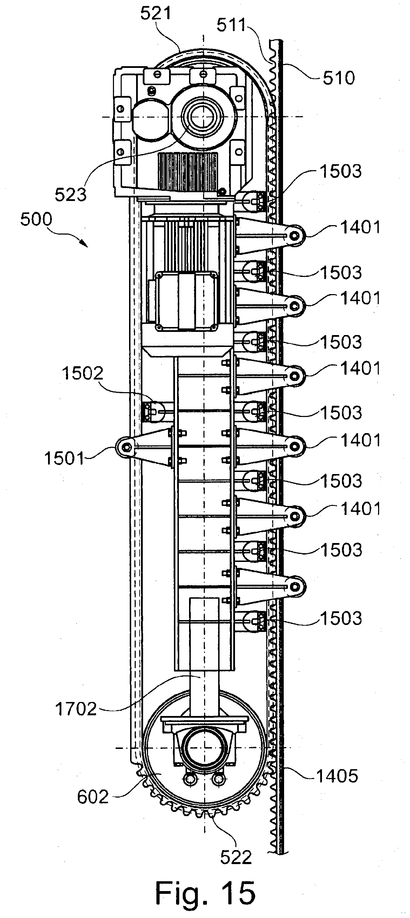

**Fig. 15** zeigt eine Seitenansicht eines Abschnitts eines Fördersystems 500 gemäß einer beispielhaften Ausführungsform, in welcher ebenfalls die Anpressrollen 1401 gezeigt sind. Entlang eines Vorlaufabschnitts 1405 der Förderbahn 510 sind die Anpressrollen 1401 angeordnet. Diese führen die Förderbahn 510 entlang einer gewünschten Spur und verbessern somit das Laufverhalten der Förderbahn 510.

An einem Rücklaufabschnitt der Antriebsbahn 521 kann eine weitere Anpressrolle 1501 die Antriebsbahn 521 gegen eine Auflagerolle 1502 drücken, um eine robustere Führung der Antriebsbahn 521 zu gewährleisten. Ebenso kann an einem Zuführabschnitt der Antriebsbahn 521 eine weitere Führungsrolle 1503 vorgesehen werden, um die Antriebsbahn 521 zu führen und eine robustere Führung der Antriebsbahn 521 zu gewährleisten. Die Führungsrolle 1503 kann über die gesamte Breite der Führungsrolle 1503 ausgebildet sein.

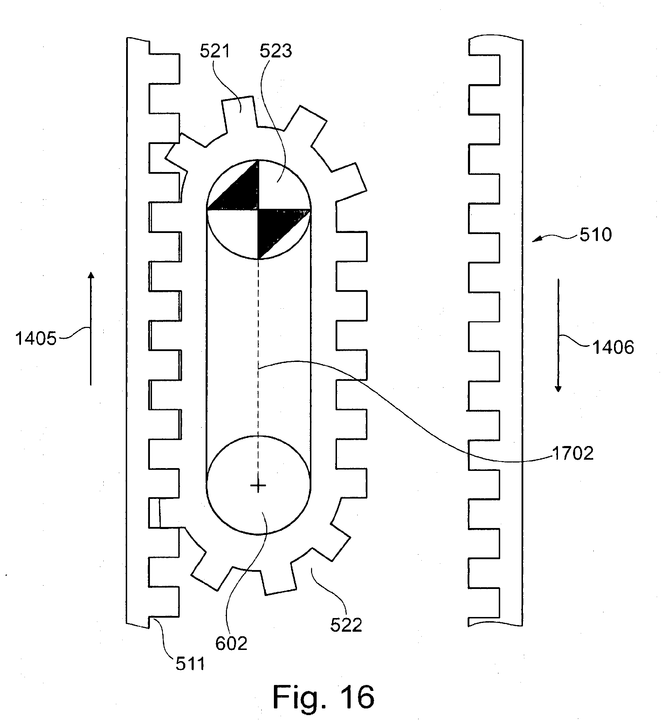

**Fig. 16** zeigt eine schematische Darstellung eines Abschnitts eines Fördersystems 500, wobei die Antriebsbahn 521 mit dem Vorlaufabschnitt 1405 und dem Rücklaufabschnitt 1406 der Förderbahn 510 gekoppelt ist. Die Antriebsbahn 521 bildet entsprechend eine geschlossene Schleife aus, welche um zwei beabstandete Umlaufrollen 602 geführt ist. Erfindungsgemäß fungiert eine der Umlaufrollen als Antriebselement 523. Die Drehachsen der Umlaufrollen 602, 523 sind auf einer gemeinsamen Mittelachse 1702 angeordnet. Die Antriebstrommel 523 bringt die Förderkraft beispielsweise als Antriebskraft oder Bremskraft auf und überträgt diese auf die Antriebsbahn 521.

Die Förderbahn 510 bildet eine geschlossene Schleife aus, welche um zwei weitere beabstandete Umlaufrollen geführt ist, wobei zwischen den weiteren Umlaufrollen die Förderbahn 510 einen Vorlaufabschnitt 1405 und einen Rücklaufabschnitt 1406, welche beabstandet voneinander geführt werden, aufweist. Die Antriebsbahn 521 ist derart angeordnet und ausgebildet ist, dass zumindest ein Abschnitt der Antriebsbahn 521 mit dem ersten Koppelprofil 511 an dem Vorlaufabschnitt 1405 und ein weiterer Abschnitt der Antriebsbahn 521 mit dem ersten Koppelprofil 511 an dem Rücklaufabschnitt 1406 der Förderbahn 510 gekoppelt ist.

Fördert das Fördersystem 500 entlang einer gewissen Steigung (zum Beispiel vertikal wie in Fig. 16 dargestellt), in welchen das Förderergut auf eine gewisse Höhe gefördert wird, so führt der Vorlaufabschnitt 1405 von einer unteren Umlaufrolle zu einer oberen Umlaufrolle. Der Rücklaufabschnitt 1406 führt von der oberen Umlaufrolle zu der unteren Umlaufrolle. Das Antriebselement 523 überträgt über die Antriebsbahn 521 entsprechend eine gewisse Antriebskraft, um das Förderergut auf die bestimmte Höhe zu befördern. Die Förderbahn 510 entlang des Rücklaufabschnitts 1406 weist entsprechend eine gewisse Gewichtskraft auf. Die Gewichtskraft erzeugt dabei eine Kraft, welche der Antriebskraft, mit welcher der Vorlaufabschnitt 14:05 Uhr angetrieben wird, entgegenwirkt. Ein Rücklaufabschnitt der Antriebsbahn wird in Fig. 16 mit dem Rücklaufabschnitt 1406 der Förderbahn 510 gekoppelt, sodass die Gewichtskraft der Förderbahn 510 auf die Antriebsbahn 521 übertragen wird. Da die Antriebsbahn 521 an einer unteren Position umgelenkt wird und der Rücklaufabschnitt der Antriebsbahn 521 in den Vorlaufabschnitt der Antriebsbahn 521 übergeht, wird ebenfalls die eingebrachte Gewichtskraft umgelenkt, sodass diese in Richtung der Antriebskraft wirkt und diese entsprechend verstärkt. Somit kann die Gewichtskraft des Rücklaufabschnitts der Förderbahn 510 durch die Antriebsbahn 521 aufgenommen und umgelenkt werden.

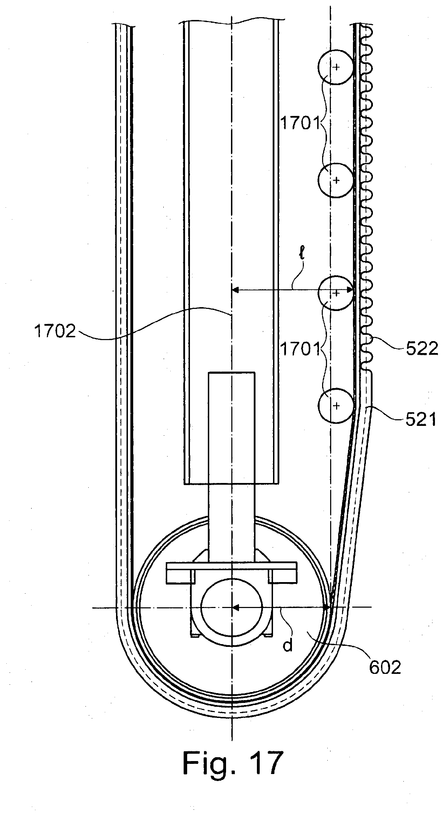

**Fig. 17** zeigt eine schematische Darstellung eines Abschnitts eines Fördersystems 500 mit Führungsrollen 1701, welche eine Überhöhung bilden. Die Antriebsbahn 521 ist über zumindest eine Führungsrolle 1701 geführt. Die Führungsrolle 1701 ist derart angeordnet, dass ein Abstand I zwischen der Mittelachse 1702 und dem Kontaktpunkt zwischen der Führungsrolle 1701 und der Antriebsbahn 521 größer ist als ein Durchmesser d zumindest einer der Umlenkrollen 602 und/oder Antriebstrommeln 523. Somit drückt die Führungsrolle 1402 die Antriebsbahn 521 von der Mittelachse 1702 insbesondere in Richtung der Förderbahn 510 (nicht dargestellt) fort. Mit anderen Worten wird mittels der Führungsrolle 1701 der Zuführabschnitt weiter von dem gegenüberliegenden Rücklaufabschnitt der Antriebsbahn weggedrückt, sodass sich eine Überhöhung bildet. Entlang dieser Überhöhung ist eine stabilere Kopplung mit dem ersten Kopplungsprofil 511 der Förderbahn 510 (nicht dargestellt) gewährleistet.

Ergänzend ist darauf hinzuweisen, dass "umfassend" keine anderen Elemente oder Schritte ausschließt und "eine" oder "ein" keine Vielzahl ausschließt. Ferner sei darauf hingewiesen, dass Merkmale oder Schritte, die mit Verweis auf eines der obigen Ausführungsbeispiele beschrieben worden ist, auch in Kombination mit anderen Merkmalen oder Schritten anderer oben beschriebener Ausführungsbeispiele verwendet werden können. Bezugszeichen in den Ansprüchen sind nicht als Einschränkung anzusehen.

**Bezugszeichenliste:**

| | | | |
|---|---|---|---|
| 1 | Zugkraft | 801 | Kopplungselement |
| 2 | Zwischenantrieb/Förderantrieb | 802 | Schraubenelement |
| 3 | reduzierte Zugkraft | 803 | drittes Kopplungsprofil |
| 4 | glatte Oberfläche | 804 | weiteres Zahnprofil |
| 5 | profilierte Oberfläche | | |
| 6 | glatte Oberfläche | 901 | Randbereiche |
| 7 | profilierte Oberfläche | 1301 | Trägerbahn |
| 500 | Fördersystem | 1302 | Trägerbahn |
| 510 | Förderbahn | | |
| 511 | erstes Kopplungsprofil | 1401 | Anpressrolle |
| 512 | Kopplungsfläche | 1402 | Trägerstruktur |
| 513 | Förderoberfläche | 1403 | Auflagerrolle |
| 514 | Trageelement | 1404 | Auflagerrolle |
| 520 | Förderantrieb | 1405 | Vorlauf |
| 521 | Antriebsbahn | 1406 | Rücklauf |
| 522 | zweites Kopplungsprofil | 1501 | Anpressrolle |
| 523 | Antriebselement | 1502 | Auflagerrolle |
| 524 | Stützelement | 1503 | Führungsrolle |
| 530 | Förderrichtung | | |
| 550 | Fördergut | 1701 | Führungsrolle |
| | | 1702 | Mittelachse |
| 601 | Stangenelement | | |
| 602 | Umlenkrolle | d | Außendurchmesser Umlenkrolle |
| 603 | Gliederkette | I | Abstand Antriebsbahn von Mittelachse |
| 604 | Stützrollen | | |
| 701 | Kopplungsnocken | | |
| 702 | Schraubenelement | | |

## Patentansprüche

1. Fördersystem (500) zum Fördern eines Fördergutes (550), das Fördersystem (500) aufweisend
eine Förderbahn (510), welche eine Förderoberfläche (513) aufweist, auf welcher das Fördergut (550) platzierbar ist, wobei die Förderbahn (510) eine angrenzend zu Förderoberfläche (513) ausgebildete Kopplungsfläche (512) aufweist, welche ein erstes Kopplungsprofil (511) aufweist,
zumindest einen Förderantrieb (2, 520) zum Antreiben und/oder Bremsen der Förderbahn (510),
wobei der Förderantrieb (2, 520) ein zweites Kopplungsprofil (522) aufweist, wobei das erste Kopplungsprofil (511) mit dem zweiten Kopplungsprofil (522) derart gekoppelt ist, dass der Förderantrieb (2, 520) mit der Förderbahn (510) zur Übertragung einer Förderkraft formschlüssig gekoppelt ist,
wobei der Förderantrieb (2, 520) eine Antriebsbahn (521) aufweist,
wobei die Antriebsbahn (521) eine geschlossene Schleife ausbildet, welche um zwei beabstandete Umlaufrollen (602) geführt ist, wobei die Drehachsen der Umlaufrollen (602) auf einer gemeinsamen Mittelachse (1702) angeordnet sind,
wobei eine der Umlaufrollen (602) ein Antriebselement (523) ist,
**dadurch gekennzeichnet, dass** zumindest eine Anpressrolle (1401) und eine Auflagerrolle (1403), derart angeordnet sind, dass die Förderbahn (510) zwischen der Anpressrolle (1401) und der Auflagerrolle (1403) verläuft, um die Förderbahn (510) zu stabilisieren,
wobei die Förderbahn (510) zwischen der Anpressrolle (1401) und der Auflagerrolle (1403) zusammendrückbar und führbar ist.

2. Fördersystem (500) gemäß Anspruch 1,
wobei die Kopplungsfläche (512) der Förderbahn (510) gegenüberliegend zu der Förderoberfläche (513) ausgebildet ist, und/oder
wobei die Kopplungsfläche (512) der Förderbahn (510) seitlich an der Förderoberfläche (513) ausgebildet ist, und/oder
wobei die Kopplungsfläche (512) der Förderbahn (510) an der Förderoberfläche (513) ausgebildet ist.

3. Fördersystem (500) gemäß einem der Ansprüche 1 und 2, wobei das erste Kopplungsprofil (511) ein Zahnprofil ausbildet.

4. Fördersystem (500) gemäß einem der Ansprüche 1 bis 3,
wobei das erste Kopplungsprofil (511) und/oder das zweite Kopplungsprofil (522) als Zahnriemenprofil ausgebildet sind.

5. Fördersystem (500) gemäß einem der Ansprüche 1 bis 4, ferner aufweisend
ein Kopplungsband,
wobei das erste Kopplungsprofil (511) an dem Kopplungsband ausgebildet ist, welches, insbesondere mittels Klebens, Vulkanisierens oder mechanischer Verbindung, an der Kopplungsfläche (512) fixiert wird.

6. Fördersystem (500) gemäß einem der Ansprüche 1 bis 5,
wobei zumindest ein Abschnitt der Antriebsbahn (521) parallel zu einem Koppelbereich der Förderbahn (510) aufweisend das erste Kopplungsprofil (511) verläuft,
wobei die Antriebsbahn (521) das zweite Kopplungsprofil (522) derart ausbildet, dass die Antriebsbahn (521) entlang dem Koppelbereich der Förderbahn (510) mit dieser formschlüssig in Eingriff steht,
wobei insbesondere die Förderbahn (510) eine geschlossene Schleife ausbildet, welche um zwei weitere beabstandete Umlaufrollen geführt ist, wobei zwischen den weiteren Umlaufrollen die Förderbahn (510) einen Vorlaufabschnitt (1405) und einen Rücklaufabschnitt (1406), welche beabstandet voneinander geführt werden, aufweist,
wobei insbesondere die Antriebsbahn (521) derart angeordnet und ausgebildet ist, dass zumindest ein Abschnitt der Antriebsbahn (521) mit dem ersten Koppelprofil an dem Vorlaufabschnitt (1405) und ein weiterer Abschnitt der Antriebsbahn (521) mit dem ersten Koppelprofil an dem Rücklaufabschnitt (1406) der Förderbahn (510) gekoppelt ist.

7. Fördersystem (500) gemäß Anspruch 6,
wobei die Antriebsbahn (521) über zumindest eine Führungsrolle (1601) geführt ist,
wobei die Führungsrolle (1601) derart angeordnet ist, dass ein Abstand (I) zwischen der Mittelachse (1702) und dem Kontaktpunkt zwischen der Führungsrolle (1601) und der Antriebsbahn (521) größer ist als ein Durchmesser (d) zumindest einer der Umlenkrollen (602).

8. Fördersystem (500) gemäß einem der Ansprüche 6 und 7,
wobei die Antriebsbahn (521) zumindest ein Stangenelement (601) aufweist, welches quer zu einer Förderrichtung (530) der Förderbahn (510) verläuft und das zweite Kopplungsprofil (522) ausbildet,
wobei insbesondere die Antriebsbahn (521) zumindest zwei beabstandete Trägerbahnen (1301), insbesondere aufweisend Kettenelemente, aufweist, zwischen welchen das zumindest eine Stangenelement (601) angeordnet ist.

9. Fördersystem (500) gemäß einem der Ansprüche 6 bis 8, ferner aufweisend
Kopplungselemente (801), welche das zweite Kopplungsprofil (522) ausbilden,
wobei die Kopplungselemente (801) an der Antriebsbahn (521) fixiert sind,
wobei insbesondere die Kopplungselemente (801) lösbar, insbesondere mittels einer Schraubverbindung, an der Antriebsbahn (521) gekoppelt sind.

10. Fördersystem (500) gemäß einem der Ansprüche 6 bis 9,
wobei der Förderantrieb (2, 520) ein Antriebselement (523), insbesondere eine Antriebstrommel, aufweist, welches mit der Antriebsbahn (521) zur Übertragung einer Förderkraft gekoppelt ist
wobei insbesondere das Antriebselement (523) mit der Antriebsbahn (521) reibschlüssig gekoppelt ist.

11. Fördersystem (500) gemäß Anspruch 10,
wobei das Antriebselement (523) ein weiteres Zahnprofil und die Antriebsbahn (521) ein drittes Kopplungsprofil (803) zur formschlüssigen Kopplung mit dem Zahnprofil des Antriebselements (523) aufweist.

12. Fördersystem (500) gemäß einem der Ansprüche 1 bis 11, ferner aufweisend zumindest einen weiteren Förderantrieb (2, 520) zum Antreiben und/oder Bremsen der Förderbahn (510),
wobei der weitere Förderantrieb (2, 520) in Förderrichtung (530) der Förderbahn (510) beabstandet zu dem Förderantrieb (2, 520) angeordnet ist, wobei der weitere Förderantrieb (2, 520) ein weiteres zweites Kopplungsprofil (522) aufweist,
wobei das erste Kopplungsprofil (511) der Förderbahn (510) mit dem weiteren zweiten Kopplungsprofil (522) derart gekoppelt ist, dass der weitere Förderantrieb (2, 520) mit der Förderbahn (310) zur Übertragung einer Förderkraft formschlüssig gekoppelt ist,
wobei insbesondere durch gezieltes Wählen der Anzahl der Förderantriebe (2, 520), dem Abstand zwischen den Förderantrieben (2, 520) und der Antriebskräfte bzw. Antriebsleistungen an den Förderantrieben (2, 520) die Zugkraft (1) unabhängig von der Förderhöhe des Förderers gezielt begrenzt bzw. gezielt unter einer Höchstzugkraft gehalten wird.

13. Fördersystem (500) gemäß Anspruch 12,
wobei die Förderbahn (510) relativ zu einer Horizontalen eine Neigung aufweist,
wobei der Förderantrieb (2, 520) und der weitere Förderantrieb (2, 520) auf unterschiedlichen Höhen relativ zu der Horizontalen angeordnet sind.

14. Fördersystem (500) gemäß einem der Ansprüche 12 und 13,
wobei zumindest der Förderantrieb (2, 520) oder der weitere Förderantrieb (2, 520) modular an die Förderbahn (510) ankoppelbar ist.

15. Verfahren zum Fördern eines Fördergutes (550), das Verfahren aufweisend
Platzieren eines Förderguts (550) auf einer Förderoberfläche (513) einer Förderbahn (510)
wobei die Förderbahn (510) eine angrenzend zu Förderoberfläche (513) ausgebildete Kopplungsfläche (512) aufweist, welche ein erstes Kopplungsprofil (511) aufweist,
Antreiben der Förderbahn (510) mittels eines Förderantriebs (2, 520), wobei der Förderantrieb (2, 520) ein zweites Kopplungsprofil (522) aufweist, wobei das erste Kopplungsprofil (511) mit dem zweiten Kopplungsprofil (522) derart gekoppelt ist, dass der Förderantrieb (2, 520) mit der Förderbahn (510) zur Übertragung einer Förderkraft formschlüssig gekoppelt ist,
wobei der Förderantrieb (2, 520) eine Antriebsbahn (521) aufweist,
wobei die Antriebsbahn (521) eine geschlossene Schleife ausbildet, welche um zwei beabstandete Umlaufrollen (602) geführt ist, wobei die Drehachsen der Umlaufrollen (602) auf einer gemeinsamen Mittelachse (1702) angeordnet sind,
wobei eine der Umlaufrollen (602) ein Antriebselement (523) ist, **gekennzeichnet durch**:
Anordnen zumindest einer Anpressrolle (1401) und einer Auflagerrolle (1403) derart, dass die Förderbahn (510) zwischen der Anpressrolle (1401) und der Auflagerrolle (1403) verläuft, um die Förderbahn (510) zu stabilisieren, wobei die Förderbahn (510) zwischen der Anpressrolle (1401) und der Auflagerrolle (1403) zusammendrückbar und führbar ist.

## Claims

1. Conveying system (500) for conveying a material (550) to be conveyed, the conveying system (500) comprising
a conveyor track (510) which comprises a conveying surface (513) on which the material (550) to be conveyed is placeable,
wherein the conveyor track (510) comprises a coupling surface (512) which is formed adjacent to the conveying surface (513), which comprises a first coupling profile (511),
at least one conveying drive (2, 520) for driving and/or braking the conveyor track (510),
wherein the conveying drive (2, 520) comprises a second coupling profile (522),
wherein the first coupling profile (511) is coupleable with the second coupling profile (522), such that the conveying drive (2, 520) is coupled with the conveyor track (510) in a form-locking manner for transferring a conveying force,
wherein the conveying drive (2, 520) comprises a drive track (521),
wherein the drive track (521) forms a closed loop which is guided around two distanced revolving rollers (602), wherein the axes of rotation of the revolving rollers (602) are arranged at a common central axis (1702),
wherein one of the revolving rollers (602) is a drive element (523),
**characterized in that**
at least one pressing roller (1401) and a support roller (1403) are arranged such that the conveyor track (510) is between the pressing roller (1401) and the support roller (1403), to stabilize the conveyor track (510),
wherein the conveyor track (510) is pressable together and guidable between the pressing roller (1401) and the support roller (1403).

2. Conveying system (500) according to claim 1,
wherein the coupling surface (512) of the conveyor track (510) is formed opposing to the conveying surface (513), and/or
wherein the coupling surface (512) of the conveyor track (510) is formed laterally at the conveying surface (513), and/or
wherein the coupling surface (512) of the conveyor track (510) is formed at the conveying surface (513).

3. Conveying system (500) according to one of the claims 1 and 2, wherein the first coupling profile (511) forms a tooth profile.

4. Conveying system (500) according to one of the claims 1 to 3,
wherein the first coupling profile (511) and/or the second coupling profile (522) are configured as toothed belt profile.

5. Conveying system (500) according to one of the claims 1 to 4, further comprising
a coupling belt,
wherein the first coupling profile (511) is formed at the coupling belt which, in particular by gluing, vulcanizing, or a mechanical connection, is fixed to the coupling surface (512).

6. Conveying system (500) according to one of the claims 1 to 5,
wherein at least one portion of the drive track (521) is parallel with respect to a coupling region of the conveyor track (510) comprising the first coupling profile (511),
wherein the drive track (521) forms the second coupling profile (522), such that the drive track (521), along the coupling region of the conveyor track (510), is engaging it in a form-looking manner,
wherein in particular the conveyor track (510) forms a closed loop which is guided around two further distanced revolving rollers,
wherein between the further revolving rollers, the conveyor track (510) comprises an advance portion (1405) and a return portion (1406) which are guided in a manner spaced apart from each other,
wherein in particular the drive track (521) is arranged and configured such that at least a portion of the drive track (521) is coupled with the first coupling profile at the advance portion (1405), and a further portion of the drive track (521) is coupled with the first coupling profile at the return portion (1406) of the conveyor track (510).

7. Conveying system (500) according to claim 6,
wherein the drive track (521) is guided over at least one guiding roller (1601),
wherein the guiding roller (1601) is arranged such that a distance (I) between the central axis (1702) and the contact point between the guiding roller (1601) and the drive track (521) is larger than a diameter (d) of at least one of the deflection rollers (602).

8. Conveying system (500) according to one of the claims 6 and 7,
wherein the drive track (521) comprises at least one rod element (601) which runs transverse with respect to a conveying direction (530) of the conveyor track (510) and forms the second coupling profile (522),
wherein in particular the drive track (521) comprises at least two distanced carrier tracks (1301), in particular comprising chain elements, between which the at least one rod element (601) is arranged.

9. Conveying system (500) according to one of the claims 6 to 8, further comprising
coupling elements (801) which form the second coupling profile (522),
wherein the coupling elements (801) are fixed to the drive track (521),
wherein in particular the coupling elements (801) are detachably coupled to the drive track (521), in particular by a screw connection.

10. Conveying system (500) according to one of the claims 6 to 9,
wherein the conveying drive (2, 520) comprises a drive element (523), in particular a drive drum, which is coupled with the drive track (521) for transferring a conveying force,
wherein in particular the drive element (523) is coupled with the drive track (521) in a frictionally engaged manner.

11. Conveying system (500) according to claim 10,
wherein the drive element (523) comprises a further tooth profile, and the drive track (521) comprises a third coupling profile (803) for form-lockingly coupling with the tooth profile of the drive element (523).

12. Conveying system (500) according to one of the claims 1 to 11, further comprising at least one further conveying drive (2, 520) for driving and/or braking the conveyor track (510),
wherein the further conveying drive (2, 520) is arranged in the conveying direction (530) of the conveyor track (510) spaced with respect to the conveying drive (2, 520),
wherein the further conveying drive (2, 520) comprises a further second coupling profile (522),
wherein the first coupling profile (511) of the conveyor track (510) is coupled with the further second coupling profile (522), such that the further conveying drive (2, 520) is coupled with the conveyor track (310) in a form-locking manner for transferring a conveying force,
wherein in particular by specifically selecting the number of the conveying drives (2, 520), the distance between the conveying drives (2, 520), and the driving forces and the driving powers, respectively, at the conveying drives (2, 520), the tensile force (1) is specifically limited and specifically kept below a maximum tensile force, respectively, independently from the conveyor height of the conveyor.

13. Conveying system (500) according to claim 12,
wherein the conveyor track (510) comprises an inclination relatively to a horizontal,
wherein the conveying drive (2, 520) and the further conveying drive (2, 520) are arranged on different heights levels relatively to the horizontal.

14. Conveying system (500) according to one of the claims 12 and 13,
wherein at least the conveying drive (2, 520) or the further conveying drive (2, 520) are coupleable in a modular manner to the conveyor track (510).

15. Method for conveying a material (550) to be conveyed, the method comprising
placing a material (550) to be conveyed on a conveying surface (513) of a conveyor track (510),
wherein the conveyor track (510) comprises a coupling surface (512) which is formed adjacent to the conveying surface (513), which comprises a first coupling profile (511),
driving the conveyor track (510) by a conveying drive (2, 520),
wherein the conveying drive (2, 520) comprises a second coupling profile (522),
wherein the first coupling profile (511) is coupled with the second coupling profile (522), such that the conveying drive (2, 520) is coupled with the conveyor track (510) in a form-locking manner, for transferring a conveying force,
wherein the conveying drive (2, 520) comprises a drive track (521),
wherein the drive track (521) forms a closed loop which is guided around two distanced revolving rollers (602), wherein the axes of rotation of the revolving rollers (602) are arranged on a common central axis (1702),
wherein one of the revolving rollers (602) is a drive element (523),
**characterized by**:
arranging at least one pressing roller (1401) and a support roller (1403), such that the conveyor track (510) is between the pressing roller (1401) and the support roller (1403), to stabilize the conveyor track (510), wherein the conveyor track (510) is pressable together and guidable between the pressing roller (1401) and the support roller (1403).

## Revendications

1. Système de transport (500) pour transporter des produits à transporter (550), le système de transport (500) présentant
une bande transporteuse (510), laquelle présente une surface de transport (513) sur laquelle les produits à transporter (550) peuvent être placés,
dans lequel la bande transporteuse (510) présente une face de couplage (512) réalisée de manière adjacente par rapport à la surface de transport (513), laquelle présente un premier profil de couplage (511),
au moins un entraînement de transport (2, 520) pour entraîner et/ou ralentir la bande transporteuse (510),
dans lequel l'entraînement de transport (2, 520) présente un deuxième profil de couplage (522),
dans lequel le premier profil de couplage (511) est couplé de telle manière au deuxième profil de couplage (522) que l'entraînement de transport (2, 520) est couplé par complémentarité de forme à la bande transporteuse (510) pour la transmission d'une force de transport,
dans lequel l'entraînement de transport (2, 520) présente une bande d'entraînement (521),
dans lequel la bande d'entraînement (521) réalise une boucle fermée, laquelle est guidée autour de deux galets de renvoi (602) tenus à distance, dans lequel les axes de rotation des galets de renvoi (602) sont disposés sur un axe central (1702) commun,
dans lequel un des galets de renvoi (602) est un élément d'entraînement (523),
**caractérisé en ce qu'**
au moins un galet de compression (1401) et un galet de support (1403) sont disposés de telle manière
que la bande transporteuse (510) s'étend entre le galet de compression (1401) et le galet de support (1403) pour stabiliser la bande transporteuse (510),
dans lequel la bande transporteuse (510) peut être compressée et guidée entre le galet de compression (1401) et le galet de support (1403).

2. Système de transport (500) selon la revendication 1,
dans lequel la face de couplage (512) de la bande transporteuse (510) est réalisée de manière à faire face à la surface de transport (513), et/ou
dans lequel la face de couplage (512) de la bande transporteuse (510) est réalisée latéralement sur la surface de transport (513), et/ou
dans lequel la face de couplage (512) de la bande transporteuse (510) est réalisée sur la surface de transport (513).

3. Système de transport (500) selon l'une quelconque des revendications 1 et 2,
dans lequel le premier profil de couplage (511) réalise un profil denté.

4. Système de transport (500) selon l'une quelconque des revendications 1 à 3,
dans lequel le premier profil de couplage (511) et/ou le deuxième profil de couplage (522) sont réalisés en tant que profil à courroie dentée.

5. Système de transport (500) selon l'une quelconque des revendications 1 à 4, présentant en outre
une bande de couplage,
dans lequel le premier profil de couplage (511) est réalisé sur la bande de couplage, laquelle est bloquée sur la face de couplage (512), en particulier au moyen de collage, de vulcanisation ou de liaison mécanique.

6. Système de transport (500) selon l'une quelconque des revendications 1 à 5,
dans lequel au moins une section de la bande d'entraînement (521) s'étend de manière parallèle à une zone de couplage de la bande transporteuse (510) présentant le premier profil de couplage (511),
dans lequel la bande d'entraînement (521) réalise le deuxième profil de couplage (522) de telle manière que la bande d'entraînement (521) est en prise le long de la zone de couplage de la bande transporteuse (510) avec celle-ci par complémentarité de forme,
dans lequel en particulier la bande transporteuse (510) réalise une boucle fermée, laquelle est guidée autour de deux autres galets de renvoi tenus à distance,
dans lequel la bande transporteuse (510) présente une section en amont (1405) et une section de retour (1406), lesquelles sont guidées à distance l'une de l'autre, entre les autres galets de renvoi,
dans lequel en particulier la bande d'entraînement (521) est disposée et réalisée de telle manière qu'au moins une section de la bande d'entraînement (521) est couplée au premier profil de couplage sur la section en amont (1405) et une autre section de la bande d'entraînement (521) est couplée au premier profil de couplage sur la section de retour (1406) de la bande transporteuse (510).

7. Système de transport (500) selon la revendication 6,
dans lequel la bande d'entraînement (521) est guidée sur au moins un galet de guidage (1601),
dans lequel le galet de guidage (1601) est disposé de telle manière qu'une distance (I) entre l'axe central (1702) et le point de contact est plus grande entre le galet de guidage (1601) et la bande d'entraînement (521) qu'un diamètre (d) d'au moins un des galets de renvoi (602).

8. Système de transport (500) selon l'une quelconque des revendications 6 et 7,
dans lequel la bande d'entraînement (521) présente au moins un élément de tige (601), lequel s'étend de manière transversale par rapport à une direction de transport (530) de la bande transporteuse (510) et réalise le deuxième profil de couplage (522),
dans lequel en particulier la bande d'entraînement (521) présente au moins deux bandes de support (1301) tenues à distance, présentant en particulier des éléments de chaîne, entre lesquels l'au moins un élément de tige (601) est disposé.

9. Système de transport (500) selon l'une quelconque des revendications 6 à 8, présentant en outre
des éléments de couplage (801), lesquels réalisent le deuxième profil de couplage (522),
dans lequel les éléments de couplage (801) sont bloqués sur la bande d'entraînement (521),
dans lequel en particulier les éléments de couplage (801) sont couplés de manière amovible, en particulier au moyen d'une liaison par vissage, à la bande d'entraînement (521).

10. Système de transport (500) selon l'une quelconque des revendications 6 à 9,
dans lequel l'entraînement de transport (2, 520) présente un élément d'entraînement (523), en particulier un tambour d'entraînement, lequel est couplé à la bande d'entraînement (521) pour la transmission d'une force de transport,
dans lequel en particulier l'élément d'entraînement (523) est couplé par friction à la bande d'entraînement (521).

11. Système de transport (500) selon la revendication 10,
dans lequel l'élément d'entraînement (523) présente un autre profil denté et la bande d'entraînement (521) présente un troisième profil de couplage (803) destiné à être couplé par complémentarité de forme au profil denté de l'élément d'entraînement (523).

12. Système de transport (500) selon l'une quelconque des revendications 1 à 11, présentant en outre au moins un autre entraînement de transport (2, 520) pour entraîner et/ou freiner la bande de transport (510),
dans lequel l'autre entraînement de transport (2, 520) est disposé dans la direction de transport (530) de la bande de transport (510) à distance de l'entraînement de transport (2, 520),
dans lequel l'autre entraînement de transport (2, 520) présente un autre deuxième profil de couplage (522),
dans lequel le premier profil de couplage (511) de la bande de transport (510) est couplé de telle manière à l'autre deuxième profil de couplage (522) que l'autre entraînement de transport (2, 520) est couplé par complémentarité de forme à la bande de transport (310) pour la transmission d'une force de transport,
dans lequel en particulier la force de traction (1) est maintenue sous une force de traction maximale de manière limitée et ciblée ou de manière ciblée indépendamment de la hauteur de transport du transporteur en particulier par une sélection ciblée du nombre des entraînements de transport (2, 520), de la distance entre les entraînements de transport (2, 520) et des forces d'entraînement ou puissances d'entraînement sur les entraînements de transport (2, 520).

13. Système de transport (500) selon la revendication 12,
dans lequel la bande de transport (510) présente par rapport à une horizontale une inclinaison,
dans lequel l'entraînement de transport (2, 520) et l'autre entraînement de transport (2, 520) sont disposés sur différentes hauteurs par rapport à l'horizontale.

14. Système de transport (500) selon l'une quelconque des revendications 12 et 13,
dans lequel au moins l'entraînement de transport (2, 520) ou l'autre entraînement de transport (2, 520) peut être accouplé de manière modulaire à la bande transporteuse (510).

15. Procédé de transport de produits à transporter (550), le procédé présentant
le placement de produits à transporter (550) sur la surface de transport (513) d'une bande transporteuse (510),
dans lequel la bande transporteuse (510) présente une face de couplage (512) réalisée de manière adjacente à la surface de transport (513), laquelle présente un premier profil de couplage (511),
l'entraînement de la bande transporteuse (510) au moyen d'un entraînement de transport (2, 520),
dans lequel l'entraînement de transport (2, 520) présente un deuxième profil de couplage (522),
dans lequel le premier profil de couplage (511) est couplé de telle manière au deuxième profil de couplage (522) que l'entraînement de transport (2, 520) est couplé par complémentarité de forme à la bande transporteuse (510) pour la transmission d'une force de transport,
dans lequel l'entraînement de transport (2, 520) présente une bande d'entraînement (521),
dans lequel la bande d'entraînement (521) réalise une boucle fermée, laquelle est guidée autour de deux galets de renvoi (602) tenus à distance, dans lequel les axes de rotation des galets de renvoi (602) sont disposés sur un axe central (1702) commun,
dans lequel un des galets de renvoi (602) est un élément d'entraînement (523),
**caractérisé par** :
la disposition d'au moins un galet de compression (1401) et d'un galet de support (1403) de telle manière que la bande transporteuse (510) s'étend entre le galet de compression (1401) et le galet de support (1403) pour stabiliser la bande transporteuse (510), dans lequel la bande transporteuse (510) peut être compressée et guidée entre le galet de compression (1401) et le galet de support (1403).
